# EUROPEAN PATENT SPECIFICATION

(11) **EP 1 118 180 B1**
(45) Date of publication and mention of the grant of the patent: **21.02.2007**
(21) Application number: 99969863.2
(22) Date of filing: 28.09.1999
(51) Int. Cl.: H04J 14/02, H04B 10/12

(54) **IMPROVEMENT IN OPTICAL MULTICHANNEL SYSTEMS**
VERBESSERUNG IN EINEM OPTISCHEN MEHRKANALSYSTEM
AMELIORATIONS CONCERNANT DES SYSTEMES OPTIQUES MULTICANAUX

(30) Priority: 28.09.1998 SE 9803296
(43) Date of publication of application: 25.07.2001
(73) Proprietor: Telia AB (publ), 123 86 Farsta (SE)
(72) Inventor: LARSSON, Stefan, S-142 62 Trangsund (SE)
(74) Representative: Hopfgarten, Nils
(86) International application number: PCT/SE1999/001719
(87) International publication number: WO 2000/019651

(56) References cited:
- US-A- 5 600 466
- PATENT ABSTRACTS OF JAPAN & JP 06 053 936 A (KOUENERUGII BUTSURIGAKU KENKYO SHOCHO) 25 February 1994
- Y. HAMAZUMI ET AL.: 'Beat Induced Crosstalk Reduction Against Wavelength Difference Between Signal and Four-Wave Mixing Lights in Unequal Channel Spacing WDM Transmission' IEEE PHOTONICS TECHNOLOGY LETTERS, vol. 8, no. 5, May 1996, pages 718 - 720, XP002941249

## Description

### TECHNICAL FIELD

The invention describes a method for division of transmission capacity via packets in time slots for optical multichannel systems (WDM) aiming at reduction of crosstalk.

### PRIOR ART

The phenomenon of FWM (Four-Wave Mixing) in optical fibre communication and its impact on multiwavelength transmission systems is known by many studies. The fact that FWM severely can degrade the performance of WDM-systems which utilise DSF, which in many countries constitutes a large part of the installed amount of optical fibre, has resulted in that a number of suggestions on how this impact shall be reduced have been worked out. One solution of the problem is to utilise different space between channels. In that way FWM-products will not fall within the electrical bandwidth of the channels, by which a large portion of the performance-degrading effect is avoided. Another way to solve the problem is to use optical fibre amplifiers with an amplification window at 1,58 µm, i.e. about 30 nm above the zero dispersion wavelength. By using this transmission window, sufficient dispersion is provided for a phase difference between channels to avoid detrimental FWM.

Use of time-divided packet transmission in optical multichannel systems is known from documents US 5 600 466, JP 6-53936 and "WDM/TDM PON System Employing a Wavelength-Seductive Filter and a Continuous-Wave Shared Light Source" by Chang J. Chae et.al, IEEE Photonics Technology letters, Vol. 10, No. 9, Sept.1998, p. 1325-1327. Document "Beat Induced Crosstalk Reduction Against Wavelength Dfference Between Signal and Four-Wave Mixing Lights in Unequal Channel Spacing WDM Transmission" by Y. Hamazumi et.al. , IEEE Photonics Technology Letters, vol.8, no.5, May 1996, p.718-720 discloses the reduction of beat induced crosstalk in WDM systems.

### TECHNICAL PROBLEM

Capacity and quality in optical multichannel systems which are using continuous transmission can be degraded by linear and/or nonlinear crosstalk. The linear crosstalk has its main origin in insufficient suppression (filtering) of not wanted signals in wavelength selective elements and optical switches, whereas the nonlinear crosstalk mainly occurs at transmission in the optical fibre.

At construction of multichannel communication systems crosstalk is a serious problem which results in that unwanted power is transferred to channels. Such a transfer of power is caused by nonlinear effects in the optical fibre, nonlinear crosstalk. Crosstalk also can occur in a perfect linear channel depending on effects in demultiplexing components, linear crosstalk.

Depending on the channel separation, power can pass from one channel to another which interferes with the detection process and increases the Bit Error Rate (BER). A wanted limitation of the Bit Error Rate can in certain cases be restored by the power being increased; such power increase is called crosstalk-induced power penalty.

Four-Wave Mixing (FWM) is a severe source of nonlinear crosstalk in optical fibres when channel separation and fibre dispersion are small. FWM depends on the KERR-effect, which is a power dependence of the refraction index of the fibre. If two lightwaves are sent into the fibre, two new lightwaves with other frequencies are created if certain conditions regarding the phase of the lightwaves are fulfilled. These phase conditions will be better fulfilled the closer in frequency the two incoming waves are. In order to, with sufficient certainty, avoid that the phase conditions are fulfilled, the channel separation must be sufficient wide. Transmission of power to the new-created frequencies is proportional to the power in each channel, plus a phase adaptation term.

### TECHNICAL SOLUTION

By dividing the transmission capacity via packets in an optical multichannel system in time slots, linear and nonlinear crosstalk can be reduced. The division means that wavelength channels can be allocated permission to transmit information (packets) in the time slots according to a schedule. The schedule is rolling and so arranged that all channels are allocated time slots normally the same number per time unit for each channel.

### ADVANTAGES

By means of the here described invention the crosstalk problems can be reduced.

The degree of utilisation of the optical fibre also can be increased by the crosstalk problems being overcome by a smaller channel separation than otherwise is needed.

Higher power can be utilised without interfering crosstalk.

### LIST OF FIGURES

Figure 1 shows set-up for experiment with time division in WDM-systems.
Figure 2 shows the optical spectra for the transmission which were obtained in the experiment at input (the upper diagram) and at the output (the lower diagram).
Figure 3 shows BER-measurements both at continuous and time divided transmission in the WDM-system. The bitrate is 2,488 Gb/s.
Figure 4 shows a schedule for distribution of time slots in an optical fibre. The example shows a schedule for 16 channels.

### EXPLANATION OF TERMS

- FWM: Four-Wave Mixing.
- WDM: Wavelength-Division Multiplex.
(Wavelength-multiplexing in optical multichannel system).
- DSF: Dispersion Shifted Fibre.
(A type of single-mode optical fibre with minimal light dispersion at 1,55 µm).
- (Light)-dispersion: Light-dispersion at transmission in optical fibre caused by that the pulse is distorted, widened, so that both range and bandwidth will be limited.
- EDFA: Erbium-Doped Fibre Amplifier.
(Amplifier which amplifies the optical signals without transforming them to the electrical domain).
- BER: Bit Error Rate.
- PC: Polarisation Controller.

### DETAILED DESCRIPTION

The description below refers to the Figures in the enclosed drawings.
Since the response time of nonlinear effects in optical fibres is considerably lower than the duration of bit slots which are used in the systems of today, optical channels will not interact with each other of they are separated in time as little as a part of the time of a bit. This gives possibility to attain a limitation of impact of cross-talk, for instance crosstalk by FWM, if time divided transmission is used in WDM-systems. Such systems might i.a. be used at WDM-transmission between switches for Gigabit-Ethernet.

### Experiment

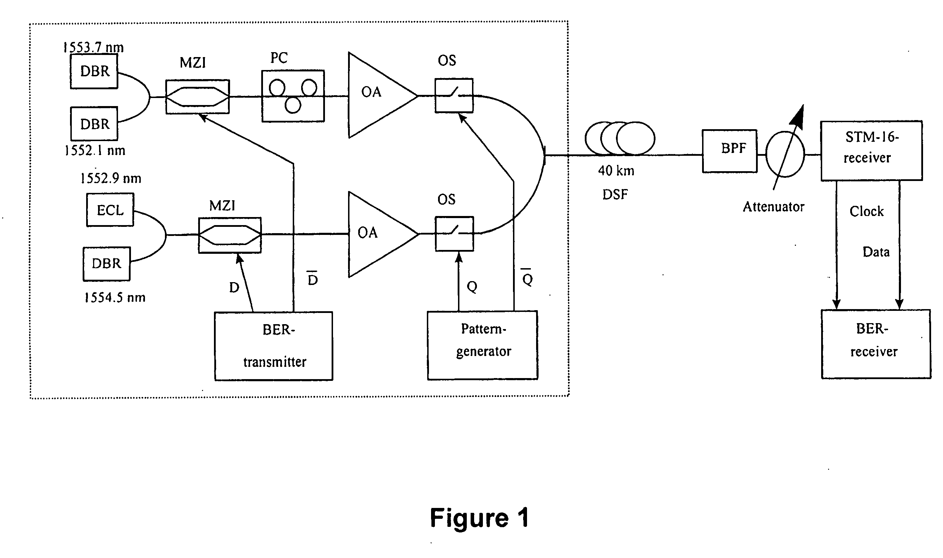

The suggested solution to limit the crosstalk has been verified at performed experiments. Figure 1 describes the experiment set-up.

Three Distributed Bragg-Reflector lasers (DBR) and one External Cavity Laser (ECL) have been used to effect the WDM-system. To make the experiment consistent with the ITU-T-recommendations, the channel separation 100 GHz (0,8nm) was used in all experiments. The wavelength for the four channels were 1552,1, 1552,9, 1553,7, respective 1554,5 nm. The even channels (number 2 and 4) and the odd channels (number 1 and 3) were combined in separate external modulators (MZI) and were modulated with a 2,488 Gb/s (STM-16) NRZ PRBS with a sequence length of 2⁷-1. Since de even and odd channels in this way are separately modulated, the random distribution in the FWM-process is maintained. The even and odd channels also were separately amplified. In addition to that, the odd channels were fed through Polarisation Controller (PC) in order to arrange the polarisation conditions in the even and odd channels. Only one PC was used for this purpose, because the polarizers which are embedded in the two modulators cause that the polarisation conditions of the outputs are arranged for even respective odd channels. Finally, the even and odd channels were optically switched in push-pull mode before being fed into the transmission fibre. The two acoustic-optical switches (OS) produced 20 µs long optical "packets" without light between the packets. In the experiments a 4 km DSF-fibre was used. The fibre consists of four spliced sections. For the four sections the zero-dispersion wavelength are 1551,3, 1546,7, 1561,1, respective 1551,8 nm, which gives an arithmetic average of the zero-dispersion wavelength of 1552,7 nm. Since this wavelength is within the band of the optical channels, the impact by FMW on the system will be high.

The receiver side consisted of an optical filter (BPF) with 3-dB bandwidth of 0,31 nm, an attenuator and an STM-16-receiver. The BER-receiver utilises "burst mode" to receive optical "packets".

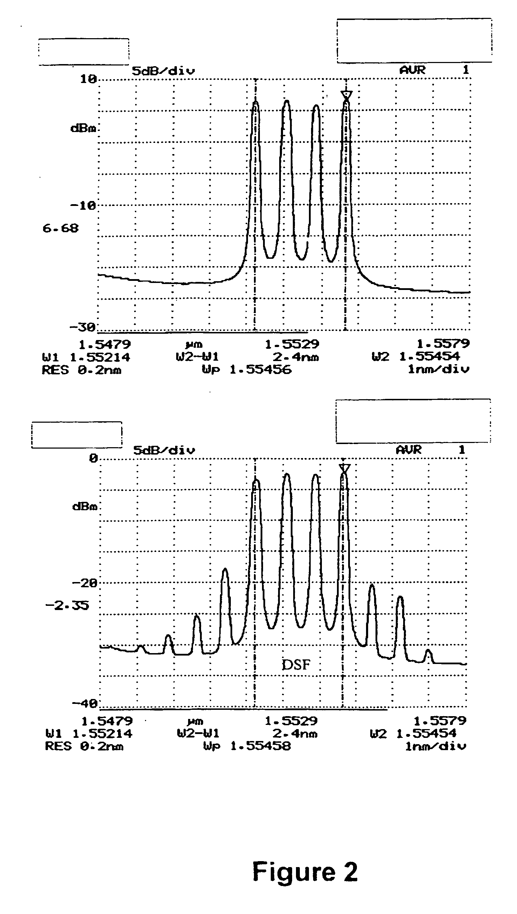

Figure 2 shows optical spectra at input and output of the transmission fibre. The input power is about +6 dBm per channel. Output spectra shows several mixed products, which indicates a high level of FWM.

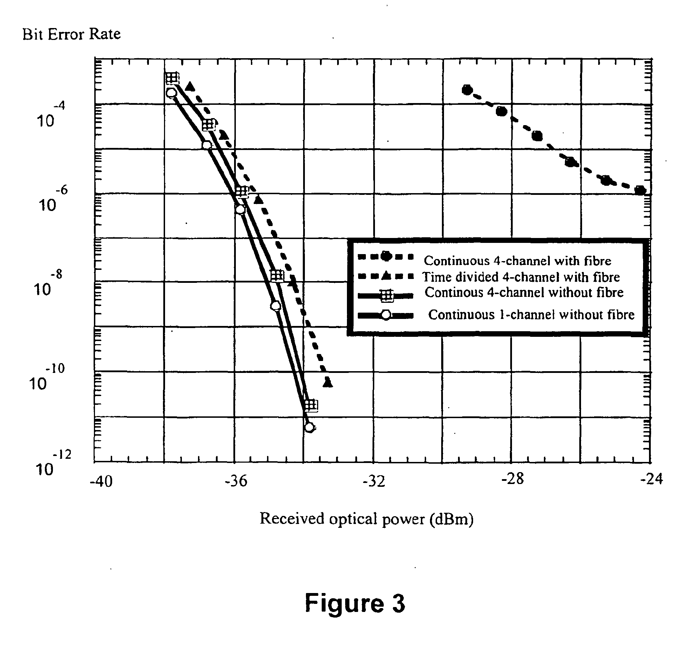

Figure 3 shows measurements of the Bit Error Rate (BER) from the measurements with the experiment set-up. All measurements were made on the third channel (1553,7 nm). The two continuous lines show the result with channel 1 and 4 without fibre. The small crosstalk-induced power penalty for the channel 4-case is mainly caused by insufficient suppression (filtering) of neighbouring channels, which results in ex-band crosstalk. The dotted lines apply to included fibre with, respective without, time division. With continuous transmission, i.e. without time division, it is not possible to achieve better result than BER=10⁻⁶. In this case the polarisation conditions for all channels were arranged, and the wavelength for ECL was adapted for the worst case on channel 3, i.e. the interference product of channel 1 and 2 would fall within the electrical bandwidth of channel 3.

The time division case is effected by push-pull switching of the two OS in 20 µs, which guarantees that channel 1 and 2 were never active at the same time. In that way no FMW-products between channel 1 and 2 occurred, and therefore there was no negative impact on channel 3. Performance of the time division case is close to the result of the case without fibre. A smaller crosstalk-induced power penalty was caused by other nonlinear effects than channel 1 and 2. No ex-band crosstalk from the channels 2 and 4 on the channels 1 and 3 occurred.

### PREFERRED EMBODIMENT

The described experiment set-up shows that a suppression of the crosstalk can be achieved by a time division of the transmission. By applying a time division for a multichannel system where the utilisation of the time slots is controlled by an algorithm, the crosstalk between the channels can be reduced. The algorithm for control of the time slots can utilise the principle that access to the fibre only is allowed if one of the two channels with closest shortest wavelengths is transmitting.

### EXAMPLE OF EMBODIMENT WITH 16 CHANNELS

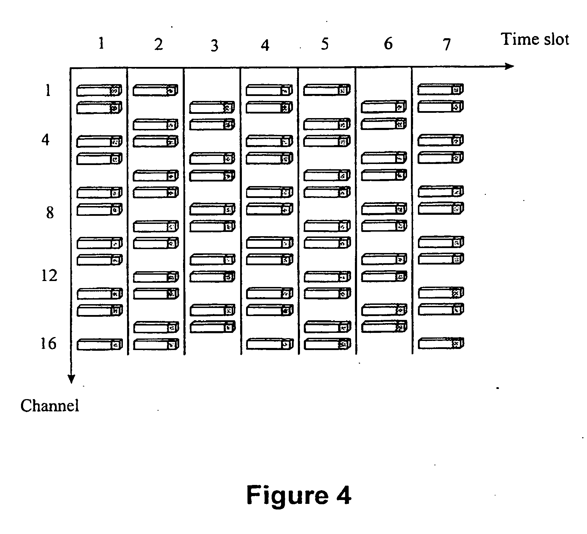

In Figure 4 is shown a suggested solution to apply the results from the described experiments by utilising time divided transmission. In the Figure an example is shown for a 16-channel system where the following algorithm for allocation of time slots is applied:
For each channel, access to the fibre is allowed only when maximum one of the two closest channels with shorter wavelength is transmitting.

This rule guarantees that FMW-products from neighbouring channels will not fall within a transmitting channel. The same result is also attained if the rule applies to the two closest channels with longer wavelength. By extending this rule to next time slot, the pattern with two transmitting channels followed by one not transmitting channel will arise. This results in that not allowed access will be equally distributed between the wavelength channels. In the Figure can be seen that the pattern is repeated after three time slots. By that is achieved that the utilised capacity of the transmission is 2/3. In order to avoid interference between time slots, possibly a guard band, which is not utilised, will be arranged between time slots. By this guard band the time slots are separated with less than the time for transmitting one bit, which results in that the transmission capacity will be somewhat reduced.

FMW-products from neighbours on the next level, i.e. between two channels with a channel in between (for instance between channel 2 and 4 in the first time-slot) neither will fall within a transmitting channel. However, the FMW-product of the fourth neighbour will be generated on a transmitting channel but in this case the degrading effect can be supposed to be small, depending on higher phase differences. The degree of utilisation 2/3 is possible to achieve for each number of channels >2, if the above mentioned rules for allocation of time slots are applied.

### DEGREE OF UTILISATION

By the here shown algorithm for allocation of time slots, the degree of utilisation has turned out to be 2/3. If other algorithms are utilised, another degree of utilisation can be achieved.

When real traffic is handled, some channel will, during certain periods, i.e. for certain time slots, be free, i.e. no transmission is going on during a certain time slot for a certain channel. This results in that the channel is free during this time. This means that some other channel has possibility to utilise the free capacity which the free time slot implies. A channel by that will have possibility to select to transmit in another time slot than the one which normally would have been allocated the channel according to the algorithm for allocation of time slots. By that, one can by means of utilisation of a more complicated algorithm achieve a higher degree of utilisation.

The average optical power is fairly constant, 11 or 10 packets out of 16 for each time slot according to the 16 channel example of Figure 4. Because EDFA-amplifiers shows large transients of output power when they are fed with varying total input power, it is advantageous if the input power can be kept constant.

Time divided transmission here has been shown to benefit from this invention, but also asynchronous WDM-transmission can be expected to benefit from the described solution. Asynchronous transmission can be described as random distribution of packets in the optical domain, in contrast to deterministic distribution in the time divided transmission.

### SUMMARY

The invention shows that degradation due to FMW in WDM-systems can be avoided, or very much reduced, by utilisation of time division. Experiments with, respective without, time division in a 4-channel WDM-system have proved that systems with low performance can be made almost faultless by the described method.

A schedule for time division in just any WDM-system is suggested. A simple rule, which gives 2/3 utilisation of available transmission resources is applied, by which a minor degradation caused by FMW is achieved.

## Claims

1. An optical multichannel system comprising means for generating channels and an optical fibre for transmission of data, and where capacity and quality in the transmission is limited by linear and/or nonlinear crosstalk, wherein the optical multichannel system utilises time division of packets for the transmission in the optical domain, **characterised in that** the means for generating channels are configured so that interference products through Four-Wave Mixing from two channels (1-16; Fig. 4) which are located next to each other do not fall within a channel which is transmitting in the same time slot (1-7; Fig. 4) as the two channels.

2. An optical multichannel system as claimed in patent claim 1, **characterised in that** the time slots are separated with less than the time for transmitting one bit.

3. An optical multichannel system as claimed in any of patent claims 1 or 2, **characterised in that** nonlinear crosstalk caused by Four-Wave Mixing is limited.

4. An optical multichannel system as claimed in any of patent claims 1 to 3, **characterised in that** the channels are given permission to transmit during the time slots according to a running schedule and that this schedule is controlled by an algorithm.

5. An optical multichannel system as claimed in patent claim 4, **characterised in that** said algorithm implies that a channel is refused permission to transmit in a time slot which is utilised for transmission of both of the two closest lower wavelength channels.

6. An optical multichannel system as claimed in patent claim 5, **characterised in that** said algorithm implies that a channel is refused permission to transmit in a time slot which is utilised for transmission of both of the two closest higher wavelength channels.

7. An optical multichannel system as claimed in any of patent claims 4 to 6, **characterised in that** said algorithm implies that the degree of utilisation of transmission channels is greater than, or equal to, 2/3, apart from a guard band, which is not utilised, between time slots.

8. An optical multichannel system as claimed in any of patent claims 4 to 7, **characterised in that** free capacity, which occurs when a channel which has not been refused to transmit has no need to transmit during a time slot, is utilised by another channel and **in that** a higher degree of utilisation is achieved.

9. An optical multichannel system as claimed in any of patent claims 1 to 8**, characterised in that** the average optical power is fairly constant.

10. An optical multichannel system as claimed in any of patent claims 1 to 9, **characterised by** four channels with the wavelengths 1552,1, 1552,9, 1553,7 respectively 1554,5 nm and in that the channels are refused permission to transmit according to a running schedule, which is repeated after three time slots, where during the first time slot the channel 1553,7 nm is refused to transmit, during the second time slot the channel 1552,9 nm is refused to transmit, and during the third time slot the channels 1554,5 nm and 1552,1 nm are refused to transmit.

11. An optical multichannel system as claimed in any of patent claims 1 to 10, **characterised in that** said optical fibre for transmission of data is a dispersion shifted optical fibre.

## Patentansprüche

1. Optisches Vielfachkanalsystem, das Mittel zum Erzeugen von Kanälen und eine optische Faser für Übertragung von Daten aufweist, und wo Kapazität und Qualität bei der Übertragung durch lineare und/oder nicht lineare Übersprechung begrenzt wird, wobei das optische Vielfachkanalsystem Zeitteilung von Paketen für die Übertragung in der optischen Domäne verwendet, **dadurch gekennzeichnet, dass** die Mittel zum Erzeugen von Kanälen so ausgebildet sind, dass Störungsprodukte durch Vierwellenmischung von zwei Kanälen (1-16; Fig. 4), die einander am nächsten angeordnet sind, nicht in einen Kanal fallen, der im selben Zeitschlitz (1-7; Fig. 4) auf den beiden Kanälen überträgt.

2. Optisches Vielfachkanalsystem nach Patentanspruch 1, **dadurch gekennzeichnet, dass** die Zeitschlitze mit weniger als die Zeit zum Übertragen eines Bits getrennt sind.

3. Optisches Vielfachkanalsystem nach einem der Patentansprüche 1 oder 2, **dadurch gekennzeichnet, dass** nichtlineares Übersprechen, das durch Vierwellenmischung bewirkt wird, begrenzt ist.

4. Optisches Vielfachkanalsystem nach einem der Patentansprüche 1 bis 3, **dadurch gekennzeichnet, dass** den Kanälen Erlaubnis gegeben wird, während der Zeitschlitze gemäß einem laufenden Plan zu übertragen und dass dieser Plan durch einen Algorithmus kontrolliert wird.

5. Optisches Vielfachkanalsystem nach Patentanspruch 4, **dadurch gekennzeichnet, dass** der Algorithmus es einschließt, dass einem Kanal die Erlaubnis verweigert wird, in einem Zeitschlitz zu übertragen, der für Übertragung von beiden der zwei nächsten Kanäle mit niedriger Wellenlängen verwendet wird.

6. Optisches Vielfachkanalsystem nach Patentanspruch 5, **dadurch gekennzeichnet, dass** der Algorithmus es einschließt, dass einem Kanal die Erlaubnis verweigert wird, in einem Zeitschlitz zu übertragen, der für Übertragung von beiden der zwei nächsten Kanäle mit größerer Wellenlänge verwendet wird.

7. Optisches Vielfachkanalsystem nach einem der Patentansprüche 4 bis 6, **dadurch gekennzeichnet, dass** der Algorithmus es einschließt, dass das Ausmaß der Verwendung von Übertragungskanälen größer als oder gleich 2/3 ist mit Ausnahme eines Schutzbandes zwischen Zeitschlitzen, das nicht benutzt wird.

8. Optisches Vielfachkanalsystem nach einem der Patentansprüche 4 bis 7, **dadurch gekennzeichnet, dass** freie Kapazität, die auftritt, wenn ein Kanal, dem es nicht verweigert worden ist, zu senden, keinen Bedarf zum Übertragen während eines Zeitschlitzes hat, durch einen anderen Kanal benutzt wird und dass ein höheres Ausmaß der Benutzung erreicht wird.

9. Optisches Vielfachkanalsystem nach einem der Patentansprüche 1 bis 8, **dadurch gekennzeichnet, dass** die durchschnittliche optische Leistung ziemlich konstant ist.

10. Optisches Vielfachkanalsystem nach einem der Patentansprüche 1 bis 9, **gekennzeichnet durch** 4 Kanäle mit den Wellenlängen 1552,1, 1552,9, 1553,7 bzw. 1554,5 nm, und **dadurch**, dass den Kanälen Erlaubnis verweigert wird, entsprechend einem laufenden Plan zu übertragen, der nach drei Zeitschlitzen wiederholt wird, wobei es während des ersten Zeitschlitzes dem Kanal 1553,7 nm verweigert wird zu übertragen, es während des zweiten Zeitschlitzes dem Kanal 1552,9 nm es verweigert wird, zu übertragen, und es während des dritten Zeitschlitzes den Kanälen 1554,5 nm und 1552,1 nm verweigert wird, zu übertragen.

11. Optisches Vielfachkanalsystem nach einem der Patentansprüche 1 bis 10, **dadurch gekennzeichnet, dass** die optische Faser zum Übertragen von Daten eine dispersionsverschobene optische Faser ist.

## Revendications

1. Système optique multicanaux comprenant des moyens pour générer des canaux et une fibre optique pour la transmission de données, et où la capacité et la qualité de la transmission sont limitées par la diaphonie linéaire et/ou non linéaire, dans lequel le système optique multicanaux utilise la division dans le temps de paquets pour la transmission dans le domaine optique, **caractérisé en ce que** les moyens pour générer des canaux sont configurés de telle sorte que les produits d'interférence à travers un mélange à quatre ondes provenant de deux canaux (1-16 ; fig. 4), qui sont situés l'un à côté de l'autre, ne tombent pas à l'intérieur d'un canal qui transmet dans la même tranche de temps (1-7 ; fig. 4) que les deux canaux.

2. Système optique multicanaux selon la revendication 1, **caractérisé en ce que** les tranches de temps sont séparées d'au moins le temps mis pour transmettre un bit.

3. Système optique multicanaux selon l'une quelconque des revendications 1 ou 2, **caractérisé en ce que** la diaphonie non linéaire causée par le mélange à quatre ondes est limitée.

4. Système optique multicanaux selon l'une quelconque des revendications 1 à 3, **caractérisé en ce que** les canaux reçoivent la permission de transmettre pendant les tranches de temps selon un programme de marche et **en ce que** ce programme est commandé par un algorithme.

5. Système optique multicanaux selon la revendication 4, **caractérisé en ce que** ledit algorithme implique qu'un canal se voit refuser la permission de transmettre dans une tranche de temps qui est utilisée pour la transmission des deux canaux de longueur d'onde inférieure les plus proches.

6. Système optique multicanaux selon la revendication 5, **caractérisé en ce que** ledit algorithme implique qu'un canal se voit refuser la permission de transmettre dans une tranche de temps qui est utilisée pour la transmission des deux canaux de longueur d'onde supérieure les plus proches.

7. Système optique multicanaux selon l'une quelconque des revendications 4 à 6, **caractérisé en ce que** ledit algorithme implique que le degré d'utilisation des canaux de transmission est supérieur ou égal à 2/3, outre une bande de garde, qui n'est pas utilisé, entre les tranches de temps.

8. Système optique multicanaux selon l'une quelconque des revendications 4 à 7, **caractérisé en ce qu'**une capacité libre, qui se produit lorsqu'un canal qui ne s'est pas vu refuser la transmission n'a pas besoin de transmettre pendant une tranche de temps, est utilisée par un autre canal et **en ce qu'**un degré d'utilisation plus élevé est obtenu.

9. Système optique multicanaux selon l'une quelconque des revendications 1 à 8, **caractérisé en ce que** la puissance optique moyenne est à peu près constante.

10. Système optique multicanaux selon l'une quelconque des revendications 1 à 9, **caractérisé en ce qu'**il existe quatre canaux ayant respectivement les longueurs d'onde 1552,1, 1552,9, 1553,7, 1554,5 nm, et **en ce que** les canaux se voient refuser la permission de transmettre selon un programme de marche, qui est répété après trois tranches de temps, où pendant la première tranche de temps le canal 1553,7 nm se voit refuser la transmission, pendant la seconde tranche de temps, le canal 1552,9 nm se voit refuser la transmission, et pendant la troisième tranche de temps, les canaux 1554,5 nm et 1552,1 nm se voient refuser la transmission.

11. Système optique multicanaux selon l'une quelconque des revendications 1 à 10, **caractérisé en ce que** ladite fibre optique pour transmission de données est une fibre optique à dispersion décalée.
